# EUROPEAN PATENT SPECIFICATION

(11) **EP 1 454 122 B1**
(45) Date of publication and mention of the grant of the patent: **08.06.2005**
(21) Application number: 02804337.0
(22) Date of filing: 03.12.2002
(51) Int. Cl.: G01N 3/08, G01N 3/22

(54) **TORSION, COMPRESSION, TENSILE TEST MACHINE WITH TUBULAR BODY**
TESTMASCHINE FÜR TORSION, DRUCK, ZUG MIT EINEM RÖHRENFÖRMIGEN KÖRPER
MACHINE D'ESSAI DE TORSION, DE COMPRESSION ET DE TRACTION A CORPS TUBULAIRE

(30) Priority: 04.12.2001 IT MI20012554
(43) Date of publication of application: 08.09.2004
(73) Proprietor: Politecnico Di Milano, 20133 Milano (IT)
(72) Inventor: TERRANOVA, Angelo, I-20133 Milano (IT); BARAGETTI, Sergio, I-20133 Milano (IT); RE, Paolo, Angelo, I-20133 Milano (IT)
(74) Representative: Jorio, Paolo
(86) International application number: PCT/IT2002/000757
(87) International publication number: WO 2003/048741

(56) References cited:
- US-A- 5 948 994

## Description

### TECHNICAL FIELD

The present invention relates to a test machine.

More specifically, the present invention relates to a machine for performing static or time-variable torsion, compression and tensile tests of test specimens. The tests comprise subjecting a test specimen to both separate torsion, tensile and compression loads, and to simultaneous torsion and compression or tensile loads.

### BACKGROUND ART

Test machines of the above type are known, and normally comprise frames, each comprising a bottom plate connected to a top plate by four or two columns. The top and bottom plates support respective specimen clamping devices; the clamping device on the bottom plate is fixed; and the top plate supports a test load application device connected to the other clamping device, which is therefore movable.

Application of test loads to the specimen produces stress in the specimen and a reaction on the frame, which, in test machines of the type described above, is designed to withstand without strain the reaction transmitted to it by the specimen via the clamping devices and the load application device. For a frame of the above type, combined torsion and tensile testing of the specimen is especially critical by producing a combined bending moment and compression reaction on the columns, which must therefore have an extremely large cross section in relation to their length. As a result, the frame as a whole is of considerable size, so that the machine is heavy, bulky and expensive in relation to the size of the test specimens, is difficult to transport, and is therefore of only limited use on site.

### DISCLOSURE OF THE INVENTION

It is an object of the present invention to provide a test machine designed to eliminate the drawbacks of the known state of the art, and which, in particular, is fairly compact in relation to the size of the test specimens, and combines a high degree of reliability with low cost.

According to the present invention, there is provided a test machine comprising a first and a second clamping device, which are aligned along a given axis and grip opposite ends of a test specimen; a test load application device for applying test loads to said specimen; and a frame for supporting the first and second clamping device and the test load application device; characterized in that said frame comprises a tubular body extending about said axis and between said clamping devices to withstand the reaction transmitted to the frame.

The present invention provides for achieving a frame which is both rigid and compact, by employing a tubular body which reacts to torsion, compression and pull along the test machine axis, with no bending moments being generated along the tubular body itself.

### BRIEF DESCRIPTION OF THE DRAWINGS

A number of non-limiting embodiments of the present invention will be described by way of example with reference to the accompanying drawings, in which:
Figure 1 shows a front view, with parts in section and parts removed for clarity, of a test machine in accordance with a first embodiment of the present invention;
Figure 2 shows a section along line II-II of the Figure 1 machine;
Figure 3 shows a section along line III-III of the Figure 2 machine;
Figure 4 shows a section, with parts removed for clarity, of a machine in accordance with a second embodiment of the present invention;
Figures 5 and 6 show views in perspective of respective variations of a component part of the Figure 1 machine.

### BEST MODE FOR CARRYING OUT THE INVENTION

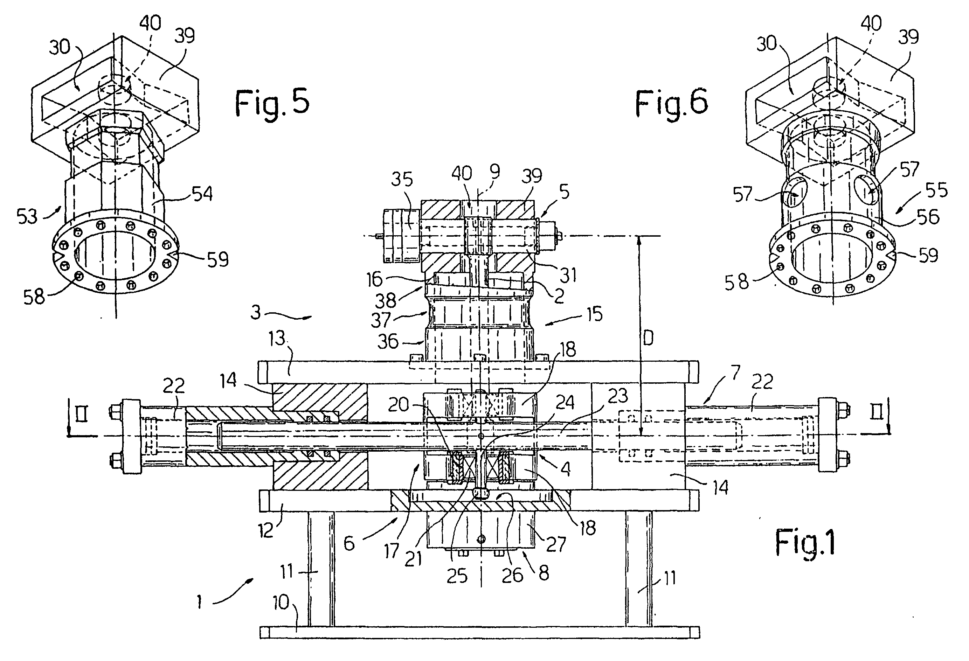

Number 1 in Figures 1 to 3 indicates as a whole a test machine for testing specimens 2 having two opposite ends gripped by machine 1. Machine 1 is used for tests which comprise applying loads to specimens 2. The tests may be static or fatigue torsion, tensile or compression tests; the torsion tests, on the one hand, and the tensile and compression tests, on the other, may be performed simultaneously or separately; and the specimen may be enclosed in a thermal sheath for high- and low-temperature testing.

Machine 1 comprises a frame 3 for withstanding reaction to the loads applied to specimens 2; two clamping devices 4 and 5 for gripping opposite ends of a specimen 2; a test load application device 6 having actuators 7 and 8; known load cells (not shown), such as torsiometers; and a known unit (not shown) for controlling actuators 7 and 8 and processing signals emitted by the load cells.

With reference to Figure 1, machine 1 has a vertical axis 9, and frame 3 is supported by a bed 10 and four columns 11 extending above bed 10. Frame 3 comprises a bottom plate 12; a top plate 13 over and connected to plate 12 by four columns 14; and a tubular body 15 fixed by screws to the top of plate 13. Bed 10 and plates 12 and 13 have circular openings extending about axis 9; and tubular body 15 has a circular-section cylindrical lateral wall 16 with an axis coincident with axis 9.

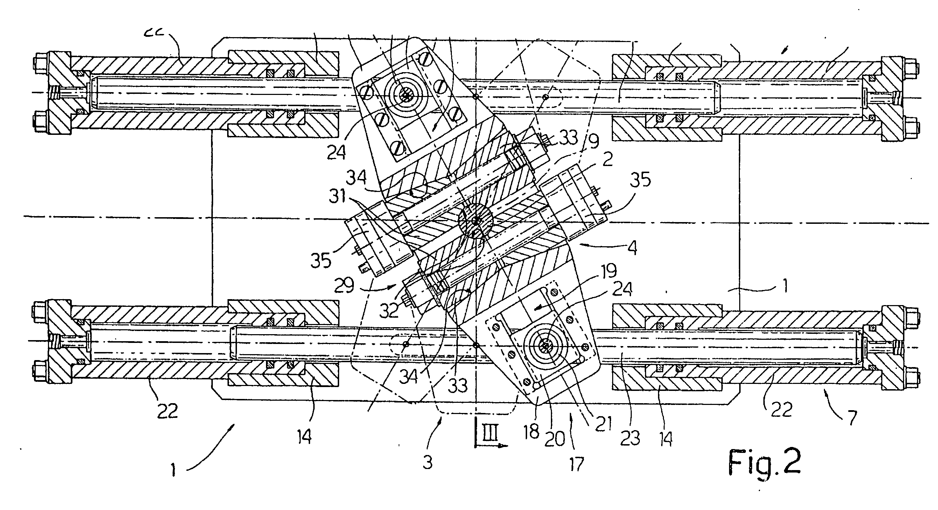

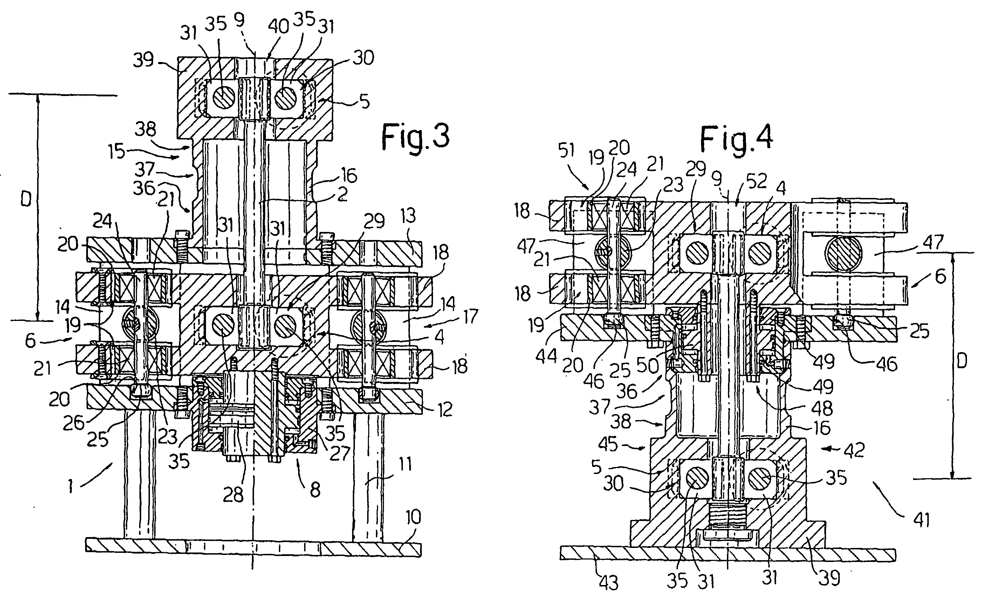

With reference to Figures 2 and 3, load application device 6 is located at plates 12 and 13, and, in addition to actuators 7 and 8, comprises a rocker arm 17 rotating about and movable along axis 9. Rocker arm 17 comprises four arms 18, each of which comprises a guide 19, a slide 20 housed in guide 19, and a bearing 21 supported by slide 20. Arms 18 are arranged to form two pairs of superimposed arms 18; each pair is diametrically opposite the other with respect to axis 9; and arms 18 in each pair are parallel, face each other, and cooperate with a respective actuator 7. Guides 19 extend radially parallel to each other and crosswise to axis 9 so as to permit adjustment of the distance between slides 20 and axis 9.

Actuators 7 are two hydraulic actuators, each of which comprises two aligned single-acting hydraulic cylinders 22 fixed to columns 14; and a rod 23, the ends of which simultaneously engage both cylinders 22, and the middle portion of which extends between a pair of arms 18. Rod 23 is integral with a shaft 24, which is fixed to the middle portion of rod 23, extends parallel to axis 9, and engages two bearings 21. The bottom end of shaft 24 has a bushing 25, which engages a straight guide 26 parallel to rod 23 and formed in plate 12. Actuator 8 is a double-acting hydraulic actuator comprising a cylinder 27 fixed to plate 12 and housed inside the central opening in plate 12; and a piston 28 sliding along axis 9 inside cylinder 27 and fixed to rocker arm 17.

Clamping devices 4 and 5 are housed in respective seats 29 and 30 formed respectively in a central portion of rocker arm 17 and in tubular body 15. with reference to Figure 2, each clamping device 4, 5 comprises two expandable sleeves 31, each having a seat 32 for specimen 2 and two wedge-shaped portions 33 cooperating with inclined faces 34 of relative seat 29, 30; and two hydraulic screws 35 for expanding sleeves 31. Screws 35 and sleeves 31 extend crosswise to axis 9.

Cylindrical wall 16 of tubular body 15 comprises three successive portions 36, 37, 38, of which portions 36 and 38 are the same thickness and thicker than portion 37.

At the top end, tubular body 15 has a wall 39, in which seat 30 of clamping device 5 is formed, and which has an axial opening 40 through which to insert and extract specimens 2.

At rest, clamping devices 4 and 5 are separated by a distance D determined by the length of specimens 2. In actual fact, distance D is substantially equal to the length of specimens 2, and only various slightly when test loads are applied; and body 15 extends parallel to axis 9 by a length of over half distance D.

In actual use, and with reference to Figure 3, a specimen 2 is inserted through opening 40 and between clamping devices 4 and 5, which are activated hydraulically to clamp the opposite ends of specimen 2, which are thus connected rigidly to rocker arm 17 and tubular body 15. With reference to Figure 2, when torsion testing, actuators 7 are operated to move rods 23 in opposite parallel directions to apply the test load. The movement of rods 23 rotates bearings 21, moves slides 20 inside respective guides 19, and rotates rocker arm 17 about axis 9 to apply a given torsion load to specimen 2. The torsion load generates stresses in specimen 2, which in turn produce a reaction via clamping devices 4 and 5, load application device 6, plate 13, columns 14, and tubular body 15. Since tubular body 15, however, covers most of distance D, columns 14 are fairly short with respect to the length of specimen 2, and therefore do not require a large section to withstand the reaction-generated bending moment acting on them. On the other hand, being tubular, body 15 is highly capable of absorbing shearing forces, with no bending moments being generated in tubular body 15 itself.

When applying axial tensile or compression loads, actuator 8 is operated, and rocker arm 17, by virtue of the connection between shafts 24 and bearings 21, is free to move, with respect to actuators 7, along axis 9 and to transmit the axial loads to specimen 2. In this case, the reaction is discharged via tubular body 15, plate 13, columns 14, and plate 12; and, as before, being short, columns 14 do not need a large section to withstand the axial reaction.

Number 41 in Figure 4 indicates a machine for performing torsion, tensile, and compression tests of specimens 2, and which comprises two clamping devices 4 and 5; a test load application device 6; and a frame 42, which differs from frame 3 of machine 1, is supported by a bed 43, and comprises a plate 44, and a tubular body 45 connected to bed 43 and plate 44. Tubular body 45 has substantially the same characteristics as tubular body 15, so any parts similar to those of tubular body 15 of machine 1 are indicated in Figure 4 using the same reference numbers. Tubular body 45 differs from tubular body 15 by wall 39 facing downwards, being fixed to bed 43, and being thicker. Plate 44 is fixed to the top end of tubular body 45, has two grooves 46 for guiding shafts 24, and supports four columns 47, each fitted with a cylinder 22. Load application device 6 of machine 41 comprises actuators 7 as already described, and an actuator 48 instead of actuator 8. Actuator 48 comprises a double-acting hydraulic cylinder defined by tubular body 45 and by two rings 49 fixed inside tubular body 45; and an annular piston 50 fixed to a rocker arm 51, which only differs from rocker arm 17 by having an axial through opening 52 through which to insert specimens 2.

In actual use, a specimen 2 is inserted through opening 52 onto machine 41 and clamped at both ends by clamping devices 4 and 5; a torsion load is applied as already described; and the reaction is discharged via tubular body 45, plate 44, columns 47, and load application device 6. when applying axial tensile or compression loads, the reaction is transmitted by actuator 48 to tubular body 45, and does not involve columns 47 or plate 44.

As compared with machine 1, test machine 41 has fewer component parts, is more compact, and does not transmit axial loads to columns 47. On the other hand, machine 1 is more versatile by enabling easier replacement of tubular body 15, e.g. with a longer tubular body for longer specimens.

Number 53 in Figure 5 indicates a variation of tubular bodies 15 and 45, in which tubular body 53 comprises a hexagonal-section cylindrical lateral wall 54.

Number 55 in Figure 6 indicates a further tubular body variation, in which tubular body 55 comprises a circular-section cylindrical lateral wall 56, and a number of openings 57, through which said transducers (not shown) can be applied directly to specimen 2. The openings may be of various shapes.

The tubular body variations in Figures 5 and 6 show the screw seats 58, and notches 59 which cooperate with projections (not shown) on plate 13.

The tubular bodies are of different lengths and thicknesses, depending on the size of the specimen.

Tubular bodies 15 and 45 being over half the length of specimen 2, columns 14 and 47 of machines 1 and 41 are much shorter than specimen 2, and therefore do not constitute critical components of respective frames 3 and 42. Moreover, for specimens longer than specimens 2, tubular bodies 15 and 45 are replaced with tubular bodies of suitable length, while the length of columns 14 and 47 remains unchanged. In other words, columns 14 and 47 are independent of the length of the specimens, and do not constitute critical components of respective frames 3 and 42 in any operating condition.

## Claims

1. A test machine comprising a first and a second clamping device (4, 5), which are aligned along a given axis (9) and grip opposite ends of a test specimen (2); a test load application device (6) for applying test loads to said specimen (2); and a frame (3; 42) for supporting the first and second clamping device (4, 5) and the test load application device (6); **characterized in that** said frame (3; 42) comprises a tubular body (15; 45; 53; 55) extending about said axis (9) and between said clamping devices (4, 5) to withstand the reaction transmitted to the frame (3; 42).

2. A machine as claimed in Claim 1, **characterized in that** said frame (3; 42) comprises at least one plate (13; 44) fixed to one end of said tubular body (15; 45; 53; 55).

3. A machine as claimed in Claim 2, **characterized in that** the test load application device (6) comprises a rocker arm (17; 51) rotating about said axis (9) and having a first seat (29) for housing the first clamping device (4).

4. A machine as claimed in Claim 3, **characterized in that** said rocker arm (17; 51) is movable along the axis (9).

5. A machine as claimed in Claim 4, **characterized in that** said rocker arm (17; 51) is supported by said frame (3; 42) by means of actuating means (7, 8; 7, 48).

6. A machine as claimed in Claim 5, **characterized in that** said actuating means (7, 8; 7, 48) comprise two hydraulic first actuators (7) connected to said plate (13; 44) of said frame (3; 42) by means of columns (14; 47), and to said rocker arm (17; 51) to transmit a twisting moment to said specimen (2).

7. A machine as claimed in Claim 6, **characterized in that** said actuating means (7, 8; 7, 48) comprise a hydraulic second actuator (8; 48) connected to the frame (3; 42) and to said rocker arm (17; 51) to transmit a compression or tensile force to said specimen (2).

8. A machine as claimed in Claim 7, **characterized in that** the first actuators (7) are so connected to said rocker arm (17; 51) as to permit axial movements of the rocker arm (17; 51) with respect to the first actuators (7); said second actuator (8; 48) permitting rotation of said rocker arm (17; 51) about the axis (9) with respect to the frame (3; 42).

9. A machine as claimed in Claim 8, **characterized in that** each first actuator (7) comprises two first cylinders (22); and a rod (23) connected to the rocker arm (17; 51) by means of a shaft (24) parallel to the axis (9) and engaging bearings (21) fitted to slides (20) movable along the rocker arm (17; 51) and radially with respect to the axis (9).

10. A machine as claimed in Claim 8 or 9, **characterized in that** the second actuator (8; 48) comprises a second cylinder (27; 45, 49) fixed to the frame (3; 42) and coaxial with the axis (9); and a piston (28; 50) fixed to the rocker arm (17; 51), coaxially with the axis (9), and movable along, and rotating freely about, the axis (9) with respect to the cylinder (27; 45, 49).

11. A machine as claimed in Claim 10, **characterized in that** said second cylinder (45; 49) is fixed directly to said tubular body (45); said piston (50) being annular to permit insertion of said specimen (2) through the piston (50).

12. A machine as claimed in Claim 11, **characterized in that** said second cylinder (45, 49) is defined partly by the tubular body (45) and by rings (49) fixed inside the tubular body (45).

13. A machine as claimed in any one of the foregoing Claims, **characterized in that** said clamping devices (4, 5) are located a given distance (D) apart along the axis (9); said tubular body (15; 45; 53, 55) extending parallel to the axis (9) by a length greater than half said distance (D).

14. A machine as claimed in any one of Claims 2 to 13, **characterized in that** said tubular body (15; 45; 53; 55) comprises an end wall (39) having a second seat (30) for housing the second clamping device (5).

15. A machine as claimed in Claim 13, **characterized in that** said tubular body (15; 45; 53; 55) is fixed rigidly to said plate (13; 44) at the opposite end to the end wall (39).

16. A machine as claimed in any one of the foregoing Claims, **characterized in that** said tubular body (15; 45; 55) has a circular-section cylindrical lateral wall (16; 56).

17. A machine as claimed in any one of Claims 1 to 16, **characterized in that** said cylindrical lateral wall (56) has lateral openings (57).

18. A machine as claimed in any one of Claims 1 to 16, **characterized in that** said tubular body (53) has a polygonal-section lateral wall (54).

19. A machine as claimed in any one of Claims 16 to 18, **characterized in that** the cylindrical lateral wall comprises three portions (36, 37, 38) in succession along the axis (9); and one portion (37), located centrally, is thinner than the other portions (36, 38).

20. A machine as claimed in any one of the foregoing Claims, **characterized in that** each of said clamping devices (4, 5) comprises two expandable sleeves (31); and two respective hydraulic screws (35) extending crosswise to said axis (9) and located inside said expandable sleeves (31).

## Patentansprüche

1. Eine Prüfmaschine, umfassend eine erste und eine zweite Spannvorrichtung (4, 5), welche entlang einer vorgegebenen Achse (9) ausgerichtet sind und entgegengesetzte Enden einer Versuchsprobe (2) festhalten; eine Prüflast-Aufbringungsvorrichtung (6) zum Aufbringen von Prüflasten auf die Probe (2); und ein Gestell (3; 42) zum Halten der ersten und der zweiten Spannvorrichtung (4, 5) und der Prüflast-Aufbringungsvorrichtung (6);
**dadurch gekennzeichnet, dass** das Gestell (3; 42) einen röhrenförmigen Körper (15; 45; 53; 55) umfasst, welcher sich um die Achse (9) herum und zwischen den Spannvorrichtungen (4, 5) erstreckt, um der auf das Gestell (3; 42) übertragenen Reaktion zu widerstehen.

2. Eine Maschine wie in Anspruch 1 beansprucht, **dadurch gekennzeichnet, dass** das Gestell (3; 42) wenigstens eine Platte (13; 44) umfasst, welche an einem Ende des röhrenförmigen Körpers (15; 45; 53; 55) befestigt ist.

3. Eine Maschine wie in Anspruch 2 beansprucht, **dadurch gekennzeichnet, dass** die Prüflast-Aufbringungsvorrichtung (6) einen Schwinghebel (17; 51) umfasst, welcher um die Achse (9) dreht und ein erstes Auflager (29) zum Aufnehmen der ersten Spannvorrichtung (4) aufweist.

4. Eine Maschine wie in Anspruch 3 beansprucht, **dadurch gekennzeichnet, dass** der Schwinghebel (17; 51) entlang der Achse (9) bewegbar ist.

5. Eine Maschine wie in Anspruch 4 beansprucht, **dadurch gekennzeichnet, dass** der Schwinghebel (17; 51) durch Betätigungsmittel (7, 8; 7, 48) von dem Gestell (3; 42) gehalten wird.

6. Eine Maschine wie in Anspruch 5 beansprucht, **dadurch gekennzeichnet, dass** die Betätigungsmittel (7, 8; 7, 48) zwei erste hydraulische Betätigungseinrichtungen (7) umfassen, welche mit der Platte (13; 44) des Gestells (3; 42) durch Säulen (14; 47) und mit dem Schwinghebel (17; 51) verbunden sind, um ein Torsionsmoment auf die Probe (2) zu übertragen.

7. Eine Maschine wie in Anspruch 6 beansprucht, **dadurch gekennzeichnet, dass** die Betätigungsmittel (7, 8; 7, 48) eine zweite hydraulische Betätigungseinrichtung (8; 48) umfassen, welche mit dem Gestell (3; 42) und dem Schwinghebel (17; 51) verbunden ist, um eine Druck- oder Zugkraft auf die Probe (2) zu übertragen.

8. Eine Maschine wie in Anspruch 7 beansprucht, **dadurch gekennzeichnet, dass** die ersten Betätigungseinrichtungen (7) mit dem Schwinghebel (17; 51) so verbunden sind, dass Axialbewegungen des Schwinghebels (17; 51) bezüglich der ersten Betätigungseinrichtungen (7) möglich sind, wobei die zweite Betätigungseinrichtung (8; 48) ein Drehen des Schwinghebels (17; 51) um die Achse (9) bezüglich des Gestells (3; 42) erlaubt.

9. Eine Maschine wie in Anspruch 8 beansprucht, **dadurch gekennzeichnet, dass** jede erste Betätigungseinrichtung (7) zwei erste Zylinder (22) und eine Stange (23) umfasst, welche mit dem Schwinghebel (17; 51) durch eine Welle (24) parallel zu der Achse (9) verbunden und mit Lagern (21) in Eingriff ist, welche mit Gleitelementen (20) zusammenpassend verbunden sind, welche entlang dem Schwinghebel (17; 51) und radial bezüglich der Achse (9) bewegbar sind.

10. Eine Maschine wie in den Ansprüchen 8 oder 9 beansprucht, **dadurch gekennzeichnet, dass** die zweite Betätigungseinrichtung (8; 48) einen zweiten Zylinder (27; 45, 49) umfasst, welcher an dem Gestell (3; 42) befestigt und koaxial zu der Achse (9) ist; und einen Kolben (28; 50), welcher an dem Schwinghebel (17; 51) befestigt ist, koaxial zu der Achse (9) und entlang der Achse (9) bewegbar und frei um sie drehend bezüglich des Zylinders (27; 45, 49).

11. Eine Maschine wie in Anspruch 10 beansprucht, **dadurch gekennzeichnet, dass** der zweite Zylinder (45; 49) direkt mit dem röhrenförmigen Körper (45) fest verbunden ist, wobei der Kolben (50) ringförmig ist, um das Einführen der Probe (2) durch den Kolben (50) zu ermöglichen.

12. Eine Maschine wie in Anspruch 11 beansprucht, **dadurch gekennzeichnet, dass** der zweite Zylinder (45, 49) teilweise durch den röhrenförmigen Körper (45) und durch in dem röhrenförmigen Körper (45) befestigte Ringe (49) definiert ist.

13. Eine Maschine wie in einem der vorangegangenen Ansprüche beansprucht, **dadurch gekennzeichnet, dass** die Spannvorrichtungen (4, 5) mit einem vorgegebenen Abstand (D) voneinander entfernt entlang der Achse (9) angeordnet sind, wobei sich der röhrenförmige Körper (15; 45; 53; 55) parallel zu der Achse (9) über eine Länge erstreckt, welche größer ist als die Hälfte des Abstands (D).

14. Eine Maschine wie in einem der Ansprüche 2 bis 13, **dadurch gekennzeichnet, dass** der röhrenförmige Körper (15; 45; 53; 55) eine Stirnwand (39) mit einem zweiten Auflager (30) zum Aufnehmen der zweiten Spannvorrichtung (5) umfasst.

15. Eine Maschine wie in Anspruch 13 beansprucht, **dadurch gekennzeichnet, dass** der röhrenförmige Körper (15; 45; 53; 55) an dem der Stirnplatte (39) gegenüberliegenden Ende steif mit der Platte (13; 44) verbunden ist.

16. Eine Maschine wie in einem der vorangegangenen Ansprüche beansprucht, **dadurch gekennzeichnet, dass** der röhrenförmige Körper (15; 45; 55) eine zylindrische Seitenwand (16; 56) mit kreisförmigem Querschnitt aufweist.

17. Eine Maschine wie in einem der Ansprüche 1 bis 16 beansprucht, **dadurch gekennzeichnet, dass** die zylindrische Seitenwand (56) seitliche Öffnungen (57) aufweist.

18. Eine Maschine wie in einem der Ansprüche 1 bis 16 beansprucht, **dadurch gekennzeichnet, dass** der röhrenförmige Körper (53) eine Seitenwand (54) mit vieleckigem Querschnitt aufweist.

19. Eine Maschine wie in einem der Ansprüche 16 bis 18 beansprucht, **dadurch gekennzeichnet, dass** die zylindrische Seitenwand drei aufeinanderfolgende Abschnitte (36, 37, 38) entlang der Achse (9) umfasst, und wobei ein in der Mitte angeordneter Abschnitt (37) dünner ist als die anderen Abschnitte (36, 38).

20. Eine Maschine wie in einem der vorangegangenen Ansprüche beansprucht, **dadurch gekennzeichnet, dass** jede der Spannvorrichtungen (4, 5) zwei erweiterbare Hülsen (31) umfasst, und wobei sich zwei entsprechende hydraulische Schrauben (35) quer zu der Achse (9) erstrecken und in den erweiterbaren Hülsen (31) angeordnet sind.

## Revendications

1. Machine d'essai comprenant des premier et second dispositifs de serrage (4, 5) qui sont alignés le long d'un axe donné (9) et serrent des extrémités opposées d'une éprouvette (2) ; un dispositif d'application de charges d'essai (6) destiné à appliquer des charges d'essai sur ladite éprouvette (2) ; et un bâti (3 ; 42) destiné à supporter les premier et second dispositifs de serrage (4, 5) et le dispositif d'application de charges d'essai (6) ; **caractérisée en ce que** ledit bâti (3 ; 42) comprend un corps tubulaire (15 ; 45 ; 53 ; 55) s'étendant autour dudit axe (9) et entre lesdits dispositifs de serrage (4, 5) pour résister à la réaction transmise au bâti (3 ; 42).

2. Machine selon la revendication 1, **caractérisée en ce que** ledit bâti (3 ; 42) comprend au moins une plaque (13 ; 44) fixée à l'une des extrémités dudit corps tubulaire (15 ; 45 ; 53 ; 55).

3. Machine selon la revendication 2, **caractérisée en ce que** le dispositif d'application de charges d'essai (6) comprend un bras pivotant (17 ; 51) qui pivote sur ledit axe (9) et qui présente un premier siège (29) destiné à recevoir le premier dispositif de serrage (4).

4. Machine selon la revendication 3, **caractérisée en ce que** ledit bras pivotant (17 ; 51) est mobile le long de l'axe (9).

5. Machine selon la revendication 4, **caractérisée en ce que** ledit bras pivotant (17 ; 51) est supporté par ledit bâti (3 ; 42) par l'intermédiaire de moyens d'actionnement (7, 8 ; 7, 48).

6. Machine selon la revendication 5, **caractérisée en ce que** lesdits moyens d'actionnement (7, 8 ; 7, 48) comprennent deux premiers actionneurs hydrauliques (7) reliés à ladite plaque (13 ; 44) dudit bâti (3 ; 42) au moyen de colonnes (14 ; 47), et audit bras pivotant (17 ; 51) pour transmettre un moment de torsion à ladite éprouvette (2).

7. Machine selon la revendication 6, **caractérisée en ce que** lesdits moyens d'actionnement (7, 8 ; 7, 48) comprennent un second actionneur hydraulique (8 ; 48) relié au bâti (3 ; 42) et audit bras pivotant (17 ; 51) pour transmettre une force de compression ou de traction à ladite éprouvette (2).

8. Machine selon la revendication 7, **caractérisée en ce que** les premiers actionneurs (7) sont reliés audit bras pivotant (17 ; 51) de manière à permettre des mouvements axiaux du bras pivotant (17 ; 51) par rapport aux premiers actionneurs (7) ; ledit second actionneur (8 ; 48) permettant la rotation dudit bras pivotant (17 ; 51) sur l'axe (9) par rapport au bâti (3 ; 42).

9. Machine selon la revendication 8, **caractérisée en ce que** chaque premier actionneur (7) comprend deux premiers cylindres (22) et une tige (23) reliée au bras pivotant (17 ; 51) au moyen d'un arbre (24) parallèle à l'axe (9) et venant en prise avec des paliers (21) montés sur des glissières (20) mobiles le long du bras pivotant (17 ; 51) et radialement par rapport à l'axe (9).

10. Machine selon la revendication 8 ou 9, **caractérisée en ce que** le second actionneur (8 ; 48) comprend un second cylindre (27 ; 45, 49) fixé au bâti (3 ; 42) et coaxial avec l'axe (9) ; et un piston (28 ; 50) fixé au bras pivotant (17 ; 51), coaxialement avec l'axe (9), déplacable le long de l'axe (9) et tournant librement sur celui-ci par rapport au cylindre (27 ; 45, 49).

11. Machine selon la revendication 10, **caractérisée en ce que** ledit second cylindre (45 ; 49) est fixé directement audit corps tubulaire (45) ; ledit piston (50) étant annulaire pour permettre l'insertion de ladite éprouvette (2) à travers le piston (50).

12. Machine selon la revendication 11, **caractérisée en ce que** ledit second cylindre (45, 49) est défini en partie par le corps tubulaire (45) et par des bagues (49) fixées à l'intérieur du corps tubulaire (45).

13. Machine selon l'une quelconque des revendications précédentes, **caractérisée en ce que** lesdits dispositifs de serrage (4, 5) sont espacés l'un de l'autre d'une distance donnée (D) le long de l'axe (9) ; ledit corps tubulaire (15 ; 45 ; 53, 55) s'étendant parallèlement à l'axe (9) sur une longueur supérieure à la moitié de ladite distance (D).

14. Machine selon l'une quelconque des revendications 2 à 13, **caractérisée en ce que** ledit corps tubulaire (15 ; 45 ; 53 ; 55) comprend une paroi d'extrémité (39) présentant un second siège (30) destiné à recevoir le second dispositif de serrage (5).

15. Machine selon la revendication 13, **caractérisée en ce que** ledit corps tubulaire (15 ; 45 ; 53 ; 55) est fixé rigidement à ladite plaque (13 ; 44), à l'extrémité opposée à la paroi d'extrémité (39).

16. Machine selon l'une quelconque des revendications précédentes, **caractérisée en ce que** ledit corps tubulaire (15 ; 45 ; 55) présente une paroi latérale cylindrique à section circulaire (16 ; 56).

17. Machine selon l'une quelconque des revendications 1 à 16, **caractérisée en ce que** ladite paroi latérale cylindrique (56) présente des ouvertures latérales (57).

18. Machine selon l'une quelconque des revendications 1 à 16, **caractérisée en ce que** ledit corps tubulaire (53) présente une paroi latérale à section polygonale (54).

19. Machine selon l'une quelconque des revendications 16 à 18, **caractérisée en ce que** la paroi latérale cylindrique comprend trois parties (36, 37, 38) successives le long de l'axe (9) ; la partie (37) située au centre étant plus mince que les autres parties (36, 38).

20. Machine selon l'une quelconque des revendications précédentes, **caractérisée en ce que** chacun desdits dispositifs de serrage (4, 5) comprend deux manchons extensibles (31) ; deux vis hydrauliques (35) respectives s'étendant transversalement audit axe (9) et étant situées à l'intérieur desdits manchons extensibles (31).
